Europäisches Patentamt

European Patent Office

Office européen des brevets

(11) Numéro de publication: **0 362 953**
**A1**

## (12) DEMANDE DE BREVET EUROPEEN

(21) Numéro de dépôt: 89202474.6

(22) Date de dépôt: 02.10.89

(51) Int. Cl.5: **H05H 3/06 , H01J 27/08**

(30) Priorité: 07.10.88 FR 8813188

(43) Date de publication de la demande:
**11.04.90 Bulletin 90/15**

(84) Etats contractants désignés:
**CH DE FR GB IT LI NL**

(71) Demandeur: **SOCIETE ANONYME D'ETUDES ET REALISATIONS NUCLEAIRES - SODERN**
**1 Avenue Descartes**
**F-94451 Limeil Brevannes Cédex(FR)**
(84) **FR**

Demandeur: **N.V. Philips'**
**Gloeilampenfabrieken**
**Groenewoudseweg 1**
**NL-5621 BA Eindhoven(NL)**
(84) **CH DE GB IT LI NL**

(72) Inventeur: **Bernardet, Henri SOCIETE CIVILE S.P.I.D.**
**209 Rue de l'Université**
**F-75007 Paris(FR)**
Inventeur: **Godechot, Xavier SOCIETE CIVILE S.P.I.D.**
**209 Rue de l'Université**
**F-75007 Paris(FR)**
Inventeur: **Lejeune, Claude SOCIETE CIVILE S.P.I.D.**
**209 Rue de l'Université**
**F-75007 Paris(FR)**

(74) Mandataire: **Lemoyne, Didier et al**
**S.P.I.D. 209, rue de l'Université**
**F-75007 Paris(FR)**

(54) **Tube neutronique scellé muni d'une source d'ions à confinement électrostatique des électrons.**

(57) Tube neutronique scellé contenant un mélange gazeux deutérium-tritium sous faible pression à partir duquel une source d'ions (13) fournit un faisceau ionique qui traverse une électrode d'accélération (17) pour être projeté à grande énegie sur une cible (16) et y produire une réaction de fusion entraînant une émission de neutrons. Selon l'invention la source d'ions est à cathode froide avec un confinement purement électrostatique des électrons ionisants assuré par la mise en oeuvre d'une anode polarisée positivement, de faible surface collective vis-à-vis de la surface répulsive de la cavité cathodique au sein de laquelle elle est placée, ladite cavité constituant la partie interne de la cathode (15) dans laquelle les électrons ($e_2$) qui oscillent suivant des trajectoires de très grandes longueurs vis-à-vis des dimensions de ladite cavité cathodique ionisent le gaz et forment un gaz ionisé d'où est extrait le faisceau ionique (22) pour des dispositifs standards d'optique ionique (17).

Application aux tubes neutroniques.

FIG.3

# TUBE NEUTRONIQUE SCELLE MUNI D'UNE SOURCE D'IONS A CONFINEMENT ELECTROSTATIQUE DES ELECTRONS.

L'invention concerne un tube neutronique scellé contenant un mélange gazeux deutérium-tritium sous faible pression à partir duquel une source d'ions fournit un faisceau ionique qui, traversant une électrode d'accélération, est projeté à grande énergie sur une électrode cible pour y produire une réaction de fusion entraînant une émission de neutrons.

Les tubes neutroniques du même genre sont utilisés dans les techniques d'examen de la matière par neutrons rapides, thermiques épithermiques ou froids : neutronographie, analyse par activation, analyse par spectrométrie des diffusions inélastiques ou des captures radiatives, diffusion des neutrons etc...

L'obtention de la pleine efficacité de ces techniques nucléaires nécessite d'avoir, pour les niveaux d'émission correspondants, des durées de vie de tubes plus longues.

La réaction de fusion d($3_H$, $4_{He}$)n délivrant des neutrons de 14 MeV est habituellement la plus utilisée en raison de sa grande section efficace pour des énergies d'ions relativement faibles. Toutefois, quelle que soit la réaction utilisée, le nombre de neutrons obtenu par unité de charge transitant dans le faisceau est toujours croissant au fur et à mesure que l'énergie des ions dirigés vers une cible épaisse est elle-même croissante et ceci largement au delà des énergies des ions obtenus dans les tubes scellés actuellement disponibles et alimentés par une THT n'excédant pas 250 kV.

Parmi les principaux facteurs limitatifs de la durée de vie d'un tube neutronique, l'érosion de la cible par le bombardement ionique est l'un des plus déterminants.

L'érosion est fonction de la nature chimique et de la structure de la cible d'une part, de l'énergie des ions incidents et de leur profil de répartition en densité sur la surface d'impact d'autre part.

Dans la plupart des cas, la cible est constituée par un matériau hydrurable (Titane, Scandium, Zirconium, Erbium etc...) capable de fixer et de relâcher des quantités importantes d'hydrogène sans perturbation notable de sa tenue mécanique ; la quantité totale fixée est fonction de la température de la cible et de la pression d'hydrogène dans le tube. Les matériaux cibles utilisés sont déposés sous forme de couches minces dont l'épaisseur est limitée par des problèmes d'adhérence de la couche sur son support. Un moyen de retarder l'érosion de la cible consiste par exemple à former la couche active absorbante d'un empilage de couches identiques isolées les unes des autres par une barrière de diffusion. L'épaisseur de chacune des couches actives est de l'ordre de la profondeur de pénétration des ions deutérium venant frapper la cible.

Une autre façon de protéger la cible et donc d'accroître la durée de vie du tube consiste à agir sur le faisceau d'ions de manière à améliorer son profil de répartition en densité sur la surface d'impact. A courant d'ions total constant sur l'électrode cible, ce qui entraîne une émission neutronique constante, cette amélioration résultera d'une répartition aussi uniforme que possible de la densité de courant sur l'ensemble de la surface offerte par la cible au bombardement des ions.

Les tubes neutroniques scellés connus utilisent en général des sources d'ions de type Penning qui ont l'avantage d'être robustes, d'être à cathode froide (d'où une longue durée d'utilisation), de donner des courants de décharge importants pour de faibles pressions (de l'ordre de 10 A/torr), d'avoir un rendement d'extraction élevé (de 10 à 40 %) et d'être de faibles dimensions.

Ce type de source présente par contre l'inconvénient de nécessiter un champ magnétique de confinement des ions de l'ordre du millier de gauss qui introduit une inhomogénéité importante de densité des ions à l'intérieur de la décharge. De plus le système d'aimants créant ledit champ est onéreux et de poids élevé.

Le but de l'invention est de procurer une source d'ions de conception plus simple, de coût et de poids réduits.

A cet effet et conformément à l'invention, ladite source d'ions est à cathode froide et à confinement purement électrostatique des électrons ionisants et comporte pour ce faire une anode positionnée de façon convenable à l'intérieur d'une cavité cathodique et de faible surface collectrice vis-à-vis de ladite cavité cathodique, et dans laquelle les électrons émis par ladite cathode ou créés dans ladite cavité et dont la probabilité d'interception par ladite anode est très réduite, oscillent autour de celle-ci suivant des trajectoires de grande longueur permettant la création d'un gaz ionisé deutérium-tritium à partir duquel des ions sont extraits d'un (ou des) orifice(s) d'émission pratiqué(s) dans la paroi cathodique faisant face à l'électrode cible au moyen d'une optique d'extraction-accélération.

Ces sources d'ions électrostatiques dépourvues de champ magnétique sont de conception et de mise en oeuvre plus simples que les sources de type Penning. Les variantes les plus connues et citées à titre d'exemple non limitatif selon la forme et la position de l'anode sont :

- le type "orbitron" dans lequel l'anode est constituée d'une tige cylindrique de très faible diamètre, disposée suivant l'axe du cylindre cathodique

- le type "saddle-field" (ainsi nommé parce que les lignes de champ électrique sont en forme de selle de cheval) dans lequel l'anode est un anneau de forme annulaire, par exemple torique, centré sur l'axe de la cathode et dont la section, de faibles dimensions, peut être creuse pour être parcourue par un fluide réfrigérant.

La description suivante en regard des dessins annexés, le tout donné à titre d'exemple, fera bien comprendre comment l'invention peut être réalisée.

La figure 1 représente le schéma de principe d'un tube neutronique scellé selon l'état de l'art antérieur.

La figure 2 montre les effets de l'érosion en profondeur de la cible et le profil radial de densité de bombardement des ions.

Les figures 3 et 4 représentent deux variantes de tubes neutroniques conformes à l'invention.

La figure 5 représente une structure multicellulaire.

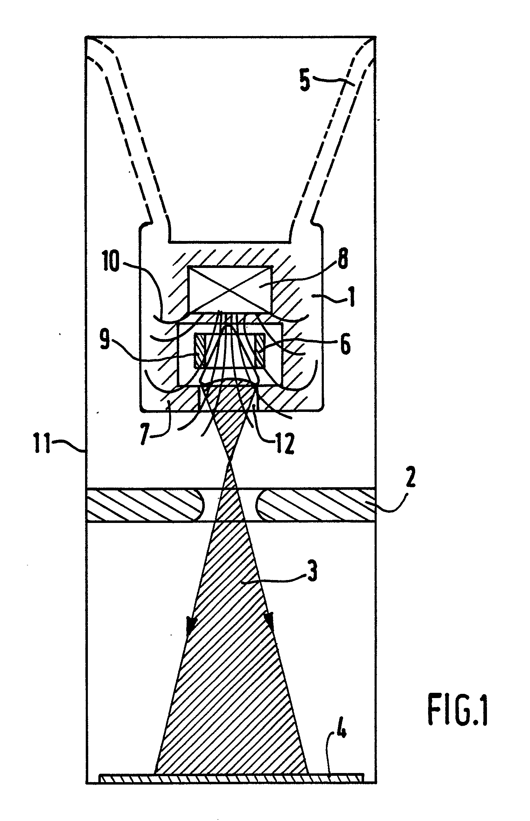

Le schéma de la figure 1 montre les principaux éléments de base d'un tube neutronique scellé 11 renfermant un mélange gazeux sous faible pression à ioniser tel que deutérium-tritium et qui comporte une source d'ions 1 et une électrode d'accélération 2 entre lesquelles existe une différence de potentiel très élevée permettant l'extraction et l'accélération du faisceau d'ions 3 et sa projection sur l'électrode cible 4 où s'effectue la réaction de fusion entraînant une émission de neutrons à 14 MeV par exemple.

La source d'ions 1 solidaire d'un isolateur 5 pour le passage du connecteur d'alimentation en THT (non représenté) est une source de type Penning par exemple, constituée d'une anode cylindrique 6, d'une structure cathodique 7 à laquelle est incorporé un aimant 8 à champ magnétique axial qui confine le gaz ionisé 9 aux alentours de l'axe du cylindre d'anode et dont les lignes de force 10 accusent une certaine divergence. Un canal d'émission des ions 12 est pratiqué dans ladite structure cathodique en vis-à-vis de l'anode.

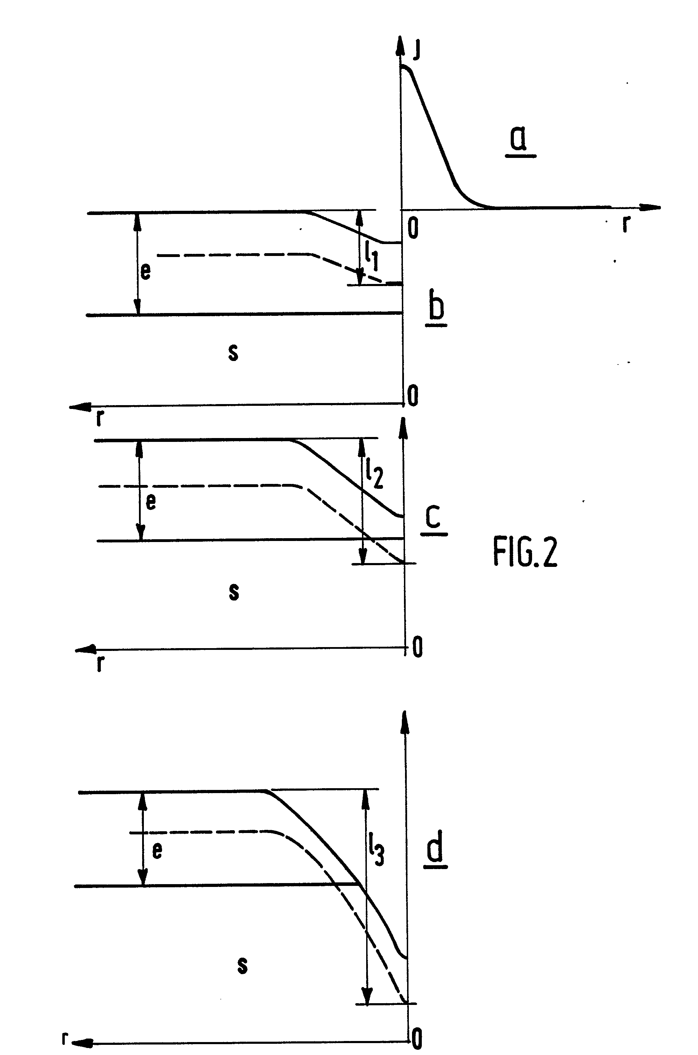

Les schémas de la figure 2 représentent les effets de l'érosion sur la cible au fur et à mesure que s'accentue le phénomène.

La figure 2a montre le profil de la densité J de bombardement des ions suivant une direction radiale quelconque. Or, à partir du point d'impact 0 de l'axe central du faisceau sur la surface de l'électrode cible pour une optique ionique standard à une seule électrode. La forme de ce profil met en valeur le caractère inhomogène de ce faisceau dont la densité très élevée dans la partie centrale décroît rapidement lorsqu'on s'en éloigne.

Sur la figure 2b l'érosion s'effectue en fonction de la densité de bombardement et toute la couche de matériau hydrurable d'épaisseur e déposée sur un substrat S est saturée en mélange deutérium-tritium. La profondeur de pénétration des ions énergétiques deutérium-tritium représentée en traits pointillés s'effectue sur une profondeur $l_1$ fonction de cette énergie.

Sur la figure 2c, l'érosion de la couche est telle que la profondeur de pénétration $l_2$ est supérieure à l'épaisseur e dans la partie la plus bombardée ; une partie des ions incidents s'implante dans le substrat et très rapidement les atomes de deutérium et de tritium sont en sursaturation.

Sur la figure 2d, les atomes de deutérium et de tritium se sont rassemblés pour donner des bulles qui, en éclatant ont formé des cratères et accru très rapidement l'érosion de la cible sur la profondeur $l_3$.

Ce dernier processus précède de peu la fin de vie du tube en entraînant soit un accroissement drastique des claquages (présence de microparticules résultant des éclatements de bulles), soit une pollution de la surface de la cible par les atomes pulvérisés absorbant l'énergie des ions incidents.

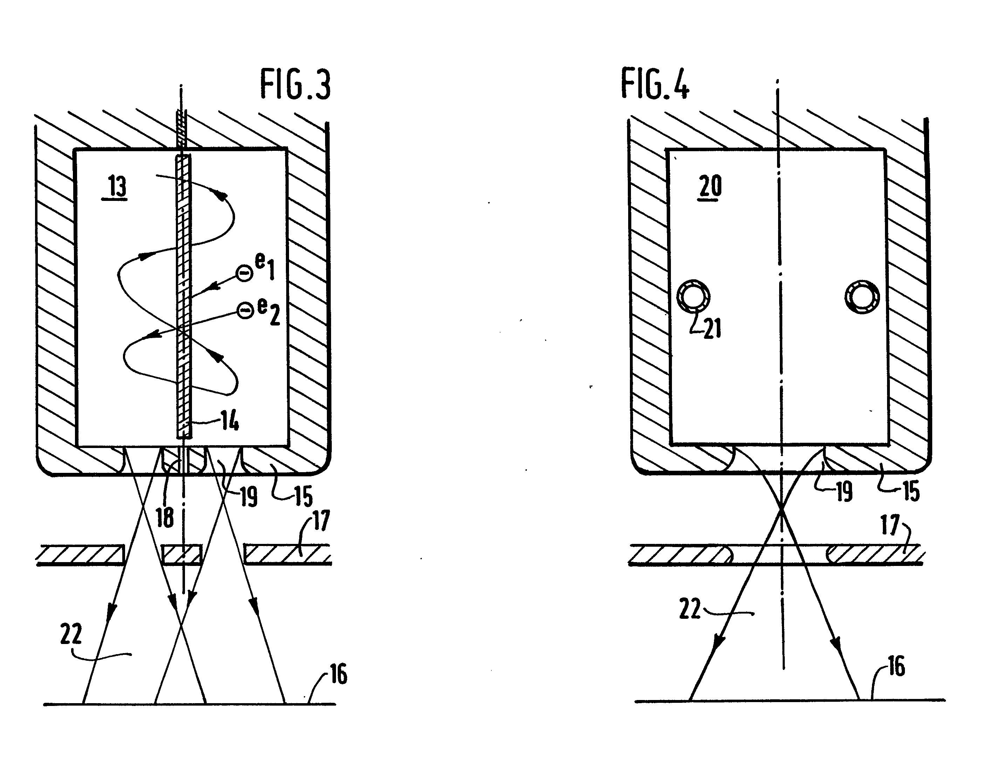

Sur les figures 3, 4 et 5, les éléments identiques sont indiqués par les mêmes chiffres de référence.

La variante de la figure 3 comporte une source d'ions 13 à confinement de type électrostatique constituée d'une anode 14, d'une cathode 15 et dont les ions sont projetés sur une cible 16 par l'intermédiaire d'une électrode d'accélération 17 convenablement polarisée.

La cathode 15 a la forme d'une cavité cylindrique polarisée à + 250 kV par rapport à la cible 16. L'anode 14 disposée suivant l'axe de cette cavité et traversant la structure cathodique par les passages isolants 18 est constituée d'une tige cylindrique de très faible diamètre portée à un potentiel positif de 5 à 10 kV par rapport à la cathode.

Les électrons en provenance de la cathode ou créés en volume de la cavité cathodique sont accélérés par le champ électrique créé par l'anode, mais celle-ci étant de très faibles dimensions, la probabilité d'interception d'un électron tel que $e_1$ est très réduite de telle sorte que la majorité des électrons qui manquent ainsi l'anode tels que $e_2$ vont effectuer autour de celle-ci des trajectoires de grande longueur au cours desquelles ils vont ioniser le mélange gazeux deutérium-tritium renfermé sous faible pression dans le tube neutronique et former ainsi un gaz ionisé.

Les ions sont extraits de ce gaz ionisé par des orifices d'émission 19 pratiqués dans la paroi de cathode et à partir desquels les faisceaux ioniques 22 sont projetés à grande énergie sur la cible 16 au moyen de l'électrode d'accélération 17.

Cette structure axiale de source est dite de type "orbitron".

La figure 4 représente une autre variante de tube neutronique muni d'une source d'ions 20 toujours à confinement de type électrostatique mais avec une anode torique 21 permettant une extraction axiale des ions.

Dans ce type de source la cathode 15 se présente comme précédemment sous l'aspect d'une cavité cylindrique dont l'axe de symétrie est également celui de l'anode torique 21 à très faible section pouvant être creuse pour être parcourue par un fluide réfrigérant et dont la position et les dimensions devront être optimisées.

Les ions sont extraits à partir de l'orifice 19 pratiqué dans la cathode, jouant ainsi le rôle d'électrode d'émission, au moyen de l'électrode d'accélération 17 portée ainsi que la cible au potentiel 0.

Les orifices d'émission sont pratiqués dans les régions homogènes de la décharge afin d'extraire un faisceau d'ions homogène.

Dans ces conditions le (ou les) faisceau(x) d'ions bombardant la cible est (sont) homogène(s) et la durée de vie du tube est ainsi augmentée.

Le principe du fonctionnement est qualitativement le même que celui ou dispositif ce la figure 3 à anode axiale.

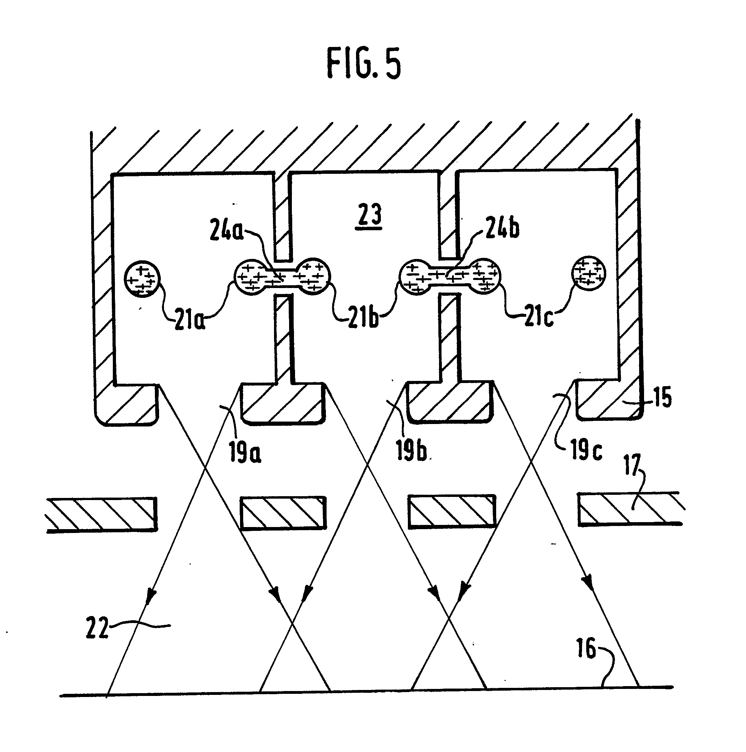

La figure 5 représente en coupe une source d'ions à structure multicellulaire 23 comprenant un agencement de sources élémentaires de type anode torique tels que 21a, 21b et 21c et des orifices d'émission correspondants tels que 19a, 19b et 19c. Les tores anodiques sont mis en communication par des liaisons telles que 24a, 24b traversant les parois cathodiques.

Par rapport à une source d'ions à confinement magnétique, une source à confinement électrostatique offre les avantages de présenter un poids plus faible, une mise en oeuvre simplifiée et un coût réduit, pour une durée de vie comparable, les deux types de structure étant également robustes et exploitant tous deux le principe de la cathode froide, assurant une très bonne longévité. Ce type de structure n'a pas jusqu'à ce jour fait l'objet d'étude d'optimisation aussi exhaustive que la structure magnétisée de type Penning, de telle sorte qu'actuellement le rendement d'émission est un peu moins favorable que celui d'une telle structure Penning, de même encombrement, mais d'une part le poids et le prix de revient sont à mettre en balance, et d'autre part une optimisation des dimensions, forme et position respectives de l'anode et de la chambre cathodique laisse la voie ouverte à une réelle compétitivité de cette structure.

**Revendications**

1. Tube neutronique scellé contenant un mélange gazeux deutérium-tritium sous faible pression à partir duquel une source d'ions fournit un faisceau ionique qui, traversant une électrode d'accélération, est projeté à grande énergie sur une électrode cible pour y produire une réaction de fusion entraînant une émission de neutrons, caractérisé en ce que ladite source d'ions est à cathode froide et à confinement purement électrostatique des électrons ionisants et comporte pour ce faire une anode positionnée de façon convenable à l'intérieur d'une cavité cathodique et de faible surface collectrice vis-à-vis de ladite cavité cathodique, et dans laquelle les électrons émis par ladite cathode ou créés dans ladite cavité et dont la probabilité d'interception par ladite anode est très réduite, oscillent autour de celle-ci suivant des trajectoires de grande longueur permettant la création d'un gaz ionisé deutérium-tritium a partir duquel des ions sont extraits d'un (ou des) orifice(s) d'émission pratiqué(s) dans la paroi cathodique faisant face a l'électrode cible au moyen d'une optique d'extraction-accélération.

2. Tube neutronique selon la revendication 1, caractérisé en ce que ladite anode est disposée suivant l'axe de ladite cavité cathodique et/ou à symétrie de révolution autour dudit axe.

3. Tube neutronique selon les revendications 1 et 2, caractérisé en ce que la source d'ions est de type multicellulaire.

FIG.1

FIG.2

FIG.3

FIG.4

EP 0 362 953 A1

3-Ⅳ-PHF 88-606

# FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 156 842  (G.W. McCLURE)<br>* Figure 1; revendications 13,15,16; colonne 4, ligne 71 - colonne 5, ligne 5; colonne 7, ligne 71 - colonne 8, ligne 9; colonne 8, lignes 25-30 *<br>--- | 1-3 | H 05 H    3/06<br>H 01 J   27/08 |
| Y | NL-A-7 707 357  (PHILIPS)<br>* Figures 1,2; page 5, lignes 5-21; page 3, lignes 12-15 *<br>--- | 1-3 | |
| A | JAPANESE JOURNAL OF APPLIED PHYSICS, PROCEEDINGS OF THE SIXTH INTERNATIONAL VACUUM CONGRESS, Kyoto, 25-29 mars 1974, supplément 2, partie 1, pages 411-414; R.K. FITCH et al.: "Design and operating characteristics of a low pressure ion source"<br>* En entier *<br>--- | 2 | |
| A | SPACE SCIENCE INSTRUMENTATION, vol. 5, no. 2, juin 1980, pages 197-207, D. Reidel Publishing Co., Dordrecht, NL; L. POMATHIOD et al.: "Development of an ion source for spacelab"<br>* Pages 199-203, paragraphes 3,4 *<br>--- | 2 | DOMAINES TECHNIQUES RECHERCHES (Int. Cl.5)<br><br>H 05 H<br>H 01 J |
| A | GB-A-1 108 997  (KAMAN AIRCRAFT CORP.)<br>* Figures 1,8-10; revendications 16-18 *<br>--- | 1-3 | |
| A | NUCLEAR INSTRUMENTS AND METHODS, vol. 34, avril-mai 1965, p North-Holland Publishing Co., Amsterdam, NL; L. RUBY et al.: "A pulsed neutron source based on the orbitron"<br>* En entier *<br>----- | 1-3 | |

Le présent rapport a été établi pour toutes les revendications

| Lieu de la recherche | Date d'achèvement de la recherche | Examinateur |
|---|---|---|
| LA HAYE | 05-12-1989 | FRITZ S.C. |